# EUROPEAN PATENT SPECIFICATION

(11) **EP 2 411 738 B1**
(45) Date of publication and mention of the grant of the patent: **07.11.2012**
(21) Application number: 10717874.1
(22) Date of filing: 17.03.2010
(51) Int. Cl.: F23N 1/00, G05D 16/06

(54) **A DEVICE FOR REGULATING THE DELIVERY PRESSURE OF COMBUSTIBLE GASES**
VORRICHTUNG ZUR FÖRDERDRUCKREGELUNG VON BRENNGASEN
DISPOSITIF POUR RÉGULER LA PRESSION DE DISTRIBUTION DE GAZ COMBUSTIBLES

(30) Priority: 25.03.2009 IT PD20090062
(43) Date of publication of application: 01.02.2012
(73) Proprietor: Sit La Precisa S.p.A. con socio unico, 35129 Padova (IT)
(72) Inventor: BENVENUTO, Michele, I-31021 Mogliano Veneto (TV) (IT); ROSSO, Giordano, I-35010 Borgoricco (PD) (IT)
(74) Representative: Fabris, Stefano
(86) International application number: PCT/IT2010/000116
(87) International publication number: WO 2010/109509

(56) References cited:
- WO-A1-03/064928
- WO-A1-2005/073632
- WO-A1-2006/003685
- US-A- 2 252 152
- US-A- 3 451 421

## Description

### Technical field

The present invention relates to a device for regulating the delivery pressure of combustible gases, in accordance with the preamble of main claim 1.

### Prior art

A device having the features outlined above is known from WO2006/003685. These devices are known to be used in valve units designed to regulate the pressure at which combustible gases are delivered to burners or similar equipment. A typical application is that of air and gas control valve units for regulating the delivery of a combustible air and gas mixture to the burner. In this type of application there is a known way of keeping the output pressure of the gas leaving the regulator constantly proportional to the pressure of the air signal within the range of pressure modulation, but with an increase by a predetermined amount. This difference is also known in this specific field as the "offset", or zero setting, the output pressure being set at values of several pascals above or below zero. In other words, it is the value of the output pressure of the gas when the value of the air pressure signal is zero. This value is typically set in the regulator by means of a screw, which is used to vary the load applied to a spring of the regulator acting on the controlling diaphragm of the regulator.

Typically, the "offset" is regulated by initially reducing the air signal to the minimum specified value (by reducing the speed of the blower associated with the valve unit, for example), and then calibrating the offset screw to set the combustion parameters (CO or CO₂) to the required value. Since it is often the case that no suitable instruments, such as sensors or other detectors (capable of measuring the coefficient of combustion λ, for example) are available on site to the installer for the measurement of these combustion parameters, there is a risk that the calibration will not be carried out correctly. Furthermore, this regulation range implies very low pressure values, of the order of a few tens of pascals or less, with correspondingly low calibration tolerances such that a very high degree of precision and sensitivity of resolution are required, especially in the sequence of tolerances of the screw-based offset regulation system, thus accentuating the problems of possibly incorrect or inaccurate calibration, which may be critical for the correct operation of the burner.

Consequently, there is a need, in the first place, to limit to some extent the possibilities of regulating the "offset" value during installation, particularly the maximum value of this parameter, thus allowing the installer to regulate the value only up to this maximum, thus avoiding at least some of the drawbacks mentioned above.

There is also a need to specify a minimum pressure value, correlated with the nominal calibration value, to ensure that the value does not fall below this minimum threshold during the regulation carried out by the installer.

### Description of the invention

A principal object of the present invention is to provide a pressure-regulating device which is structurally and functionally designed to satisfy the indicated requirements, at the same time overcoming the limits pointed out with reference to the mentioned prior art.

This and other objects which will emerge clearly hereinafter are achieved by a device for regulating the delivery pressure of combustible gases which is produced in accordance with the appended claims.

### Brief description of the drawings

Other features and advantage of the invention will be made clear by the following detailed description of some preferred examples of embodiment thereof, illustrated, for the purposes of guidance and in a non-limiting way, with reference to the appended drawings, in which:
- Figure 1 is a view in axial section of a pressure regulating device according to the invention,
- Figures 2 and 3 are views in axial section of the regulating device of Figure 1 in corresponding different operating configurations,
- Figure 4 is a perspective view of a detail of the device of the preceding figures in a corresponding operating phase,
- Figure 5 is a partial view on an enlarged scale of the detail of Figure 4 in the same operating phase,
- Figure 6 is a partial perspective view from above and on an enlarged scale of the device according to the invention,
- Figure 7 is a schematic view in axial section of a servo-assisted valve unit including a pressure regulator according to the invention, and
- Figure 8 is a view, corresponding to that of Figure 1, of a further embodiment of the invention.

### Preferred embodiments of the invention

With reference to the aforementioned figures, the number 1 indicates the whole of a device for regulating the delivery pressure of combustible gases which is produced in accordance with the present invention.

This regulator is particularly suitable for use in valve units designed to regulate the delivery pressure of gas in order to keep this pressure proportional to an air pressure signal, but increased by an amount set by means of a regulating screw, also called the "offset" screw. Said screw typically acts on a spring which acts on the controlling diaphragm of the regulator, the air pressure signal and the gas pressure signal being present, respectively, on the opposite sides of the diaphragm.

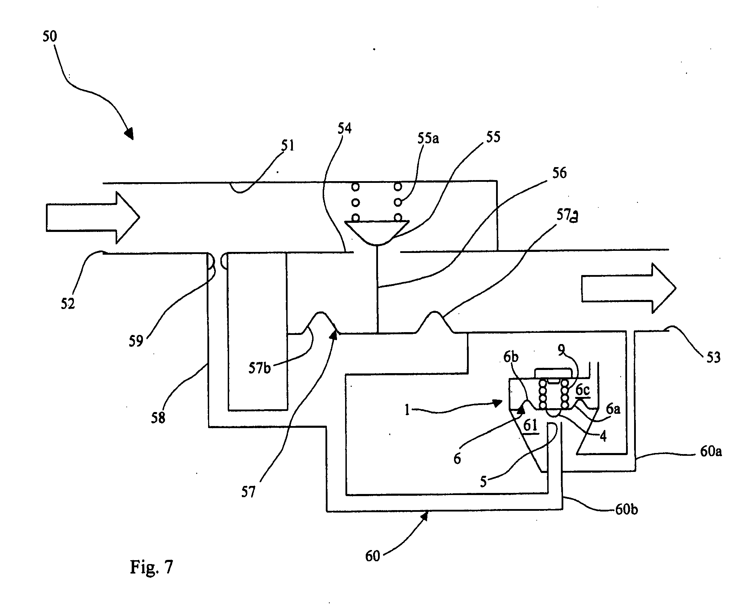

A typical arrangement of a valve unit of the aforesaid type is shown in Figure 7, the valve being constructed, for example, in the form of a servo valve, including a control circuit branched from the main gas pipe, for the servo-assisted control of the main valve by means of a pressure regulator according to the invention.

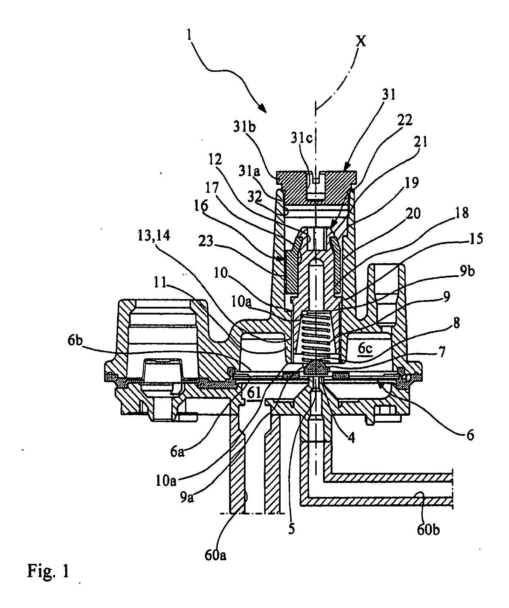

In the aforesaid arrangement, a valve unit 50 comprises a main pipe 51 extending between a gas inlet section 52 and a gas outlet section 53. In the pipe 51 there is formed a main valve seat 54, interacting with a closure element 55 whose operating rod 56 is connected rigidly to a diaphragm 57 for operating the valve. The number 55a indicates a return spring acting on the closure element. The diaphragm 57 is exposed, on the side indicated by 57a, to the pressure which is present downstream of the closure element 55, and, on the other side indicated by 57b, to a pressure which is present in a control chamber delimited by the diaphragm side 57b, said chamber communicating with the main pipe 51, upstream of the valve seat 54, through a control pipe 58. A constriction 59 is provided in the pipe 58. The control chamber is connected to the outlet section 53 of the main pipe, through a pipe 60 in which the pressure regulator 1 according to the invention is located, this regulator being described in detail below and illustrated in detail in the axial section of Figure 1.

The regulating device 1 comprises a valve seat 5 interacting with a closure element 4, which can be moved in order to open or close the seat 5 along a direction shown in the figures as the axis X.

The device 1 also comprises a diaphragm 6 which controls the closure element 4 and which is connected rigidly thereto by a connecting element 7.

The underside 6a of the diaphragm 6 delimits a control chamber 61 which communicates, through a part 60a of the pipe 60, with the outlet pipe 53, and which can also shut off, by means of the closure element 5, the outlet section of the other part 60b of the pipe 60, which communicates with the control chamber associated with the diaphragm 57.

The other, upper, side 6b of the diaphragm 6 is exposed to an air pressure signal present in a chamber 6c which is open to the atmosphere, as shown in Figure 1. It should be noted that, in other typical applications of air and gas control in which air and gas are premixed by a forced air blower, this air pressure signal may be formed by the pressure value present at the delivery end of the blower unit.

In the pressure regulator 1, a central projection 8 is formed on the element 7 and is coaxial with the axis X, one end 9a of a helical spring 9 being fitted on this projection, the spring also being positioned coaxially with the axis X so as to be guided and retained on the projection.

At its opposite axial end 9b, the spring 9 abuts a corresponding end 10a of a sleeve formation 10 which is centrally hollow and which extends axially along the axis X. Said sleeve formation 10 is axially and rotatably guided inside a cylindrical portion 11 which is formed in the stationary structure of the device and which extends coaxially with the axis X.

The cavity provided in the sleeve formation 10 also extends axially and is blind, with an end base including the surface 10a and an axially opposing annular edge 10b which extends in the mouth of the cavity. Part of the spring 9 acting on the diaphragm 6 is housed axially in said cavity.

In the sleeve portion forming the base surface 10a there is provided an external seat 12, with a hexagonal profile, which can be engaged by the end of a key or operating tool, indicated by 12a in the drawings, to cause the sleeve to rotate about the axis X.

The outer cylindrical shell of the sleeve formation 10 is also provided with a thread formation, the male thread of which, indicated by 13, can engage by screwing in a corresponding female thread 14 formed in the inner cylindrical surface of the portion 11.

The number 15 indicates a shoulder provided on the outside of the sleeve formation 10, beyond the threaded portion 13.

The male and female thread coupling 13 and 14 causes a rotation of the sleeve 10 about the axis X to be converted into a translation of the sleeve along the axis X.

The sleeve formation 10 can also be fixed with respect to rotation to a ring formation, indicated as a whole by 16, which can be fitted on the sleeve formation 10, coaxially with the axis X, as explained in detail below.

The ring formation 16 has a cylindrical inner wall with an axial splined profile 17 which can engage by axial fitting in a corresponding axial splined profile 18 formed in an outer cylindrical portion of the sleeve formation. The ring formation 16 can be fixed with respect to rotation to the sleeve formation 10 by means of the coupling between the corresponding splined profiles 17-18.

The ring formation 16 can also be fixed axially to the sleeve formation by a snap-fit coupling formed by the engagement of a plurality of resiliently deformable appendages 19 formed at one end of the ring formation in the extension of a tubular portion 20 thereof. The appendages 19 can bear against an annular bearing surface 21 provided on a terminal edge 22 of the sleeve formation.

When the ring is fitted axially on to the sleeve by engagement between the corresponding profiles 17-18, the appendages 19 interfere with the edge 22 and are resiliently deflected and then return by resilience towards their resting state, until they butt against the bearing surface 21, which their prevents axial extraction in the direction opposite the direction of fitting. At its axially opposite end, the ring 16 is retained axially by the shoulder 15 provided in the sleeve formation.

In the portion 20 of the sleeve formation there is formed a projection 23 protruding from the outer cylindrical shell and developed in a prevailing direction parallel to the main axis X. The projection 23 is designed with dimensions such that it interferes, during the rotation of the ring about the axis X, with the opposing surfaces 24a, 24b of a corresponding projection 24 formed in the inner cylindrical wall of the seat of the stationary structure of the device in which the sleeve formation 10 is fitted.

More specifically, the surfaces 24a, 24b can abut against the surfaces 23a, 23b of the projection 23 respectively, following a rotation of the ring 16 in one direction of rotation about the axis X and in the opposite direction.

Since the ring formation 16 is fixed both axially and with respect to rotation to the sleeve formation 10, the rotation of these formations about the axis X is limited by the surfaces 24a, 24b which form end stop elements for the rotation of the ring 16. Since the rotation of the ring 16 also causes a rotation of the sleeve formation 10 which is fixed to it, this rotation causes a corresponding translation along the axis X as a result of the male and female thread coupling 13,14. Consequently the sleeve formation 10 is limited in its sliding in the direction X between two opposing limit positions, correlated with the corresponding end stops of the rotation about the axis X. The two axial positions are those corresponding to the minimum value (the position farthest from the diaphragm) and the maximum value (the position closest to the diaphragm) of the resilient load which can be exerted by the sleeve formation 10 on the diaphragm 6.

The number 31 indicates a plug for closing the axial cavity of the sleeve formation 10 at the end axially opposite the end facing the diaphragm 6, this plug having a male thread portion 31a which can engage by screwing in a female thread 32 provided in the axial cavity of the sleeve 10, and a head 31b. Said head 31b is provided with a central blind cavity or seat 31c with a polygonal profile which can be engaged by an operating tool (such as an Allen key).

In operation, it should be noted that the resilient load generated by the spring 9 and acting on the diaphragm 6 can be regulated by a combination of the axial movements of the sleeve 10 relative to the stationary structure of the device, these movements being limited axially by end stops set by means of the ring 16 which predetermines the permitted angular rotational travel of the sleeve about the axis X.

The regulation of the resilient load which can be exerted on the diaphragm is described more fully below.

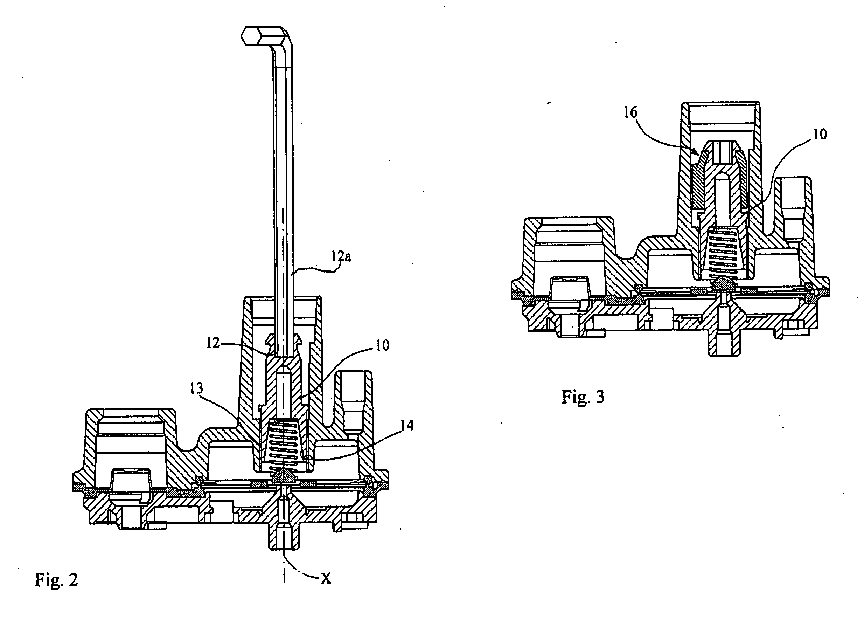

In a first phase of calibration (Fig. 2), in which the ring formation 16 is removed from the device, the plug 31 is also removed and the sleeve formation 10 is screwed into the female thread 14 of the stationary structure of the device until it reaches a predetermined position corresponding to a predetermined resilient load applied to the diaphragm 6 by the spring. This load represents a nominal calibration value set at the pressure regulated by the device.

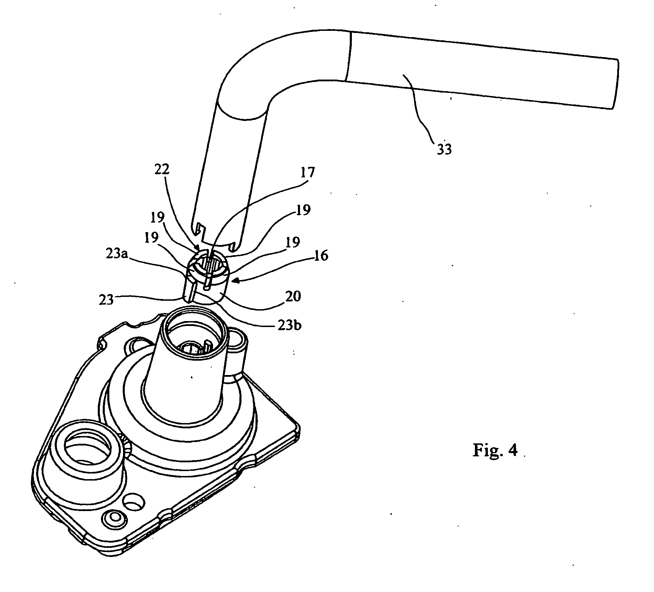

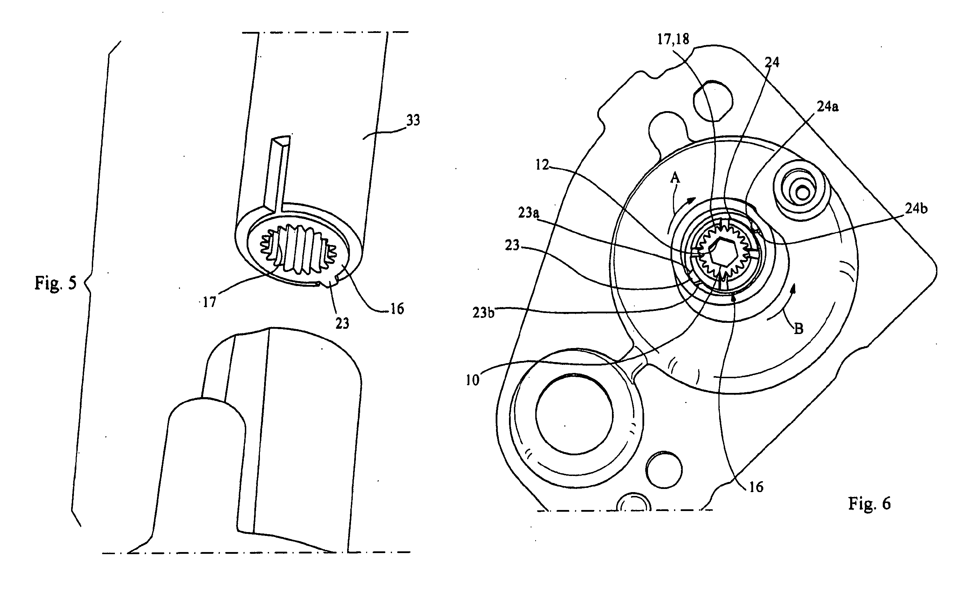

In this phase, the sleeve is screwed in by applying an appropriate tool to the operating seat 12 of the sleeve to rotate the sleeve 10 about the axis X, this rotation being converted to axial movement by the male and female thread coupling 13, 14. In this predetermined position, the ring formation 16 is mounted on the device (Fig. 3). It is fitted axially on to the sleeve formation 10 until it reaches the position in which the ring 16 is locked axially and rotationally with respect to the sleeve. The operation of fitting and locking by snap-fit coupling (Figures 3-5) is carried out with an appropriate tubular tool, indicated by 33 in Figure 4, into which the ring has been inserted beforehand. It should be noted that the ring 16 can be fixed to the sleeve 10 in a plurality of relative positions, owing to the presence of the splined axial coupling profile. A preferred relative position, shown in Figure 6, is that in which the projection 23 of the ring is positioned, during its fitting on to the sleeve, on the side of the stationary part which is diametrically opposite the projection 24. Thus the angular travel of the ring in one direction of rotation about the axis X is substantially equal to the permitted angular travel of the ring in the other direction of rotation. Consequently the corresponding axial travels of the sleeve formation from the nominal position towards the position corresponding to the minimum value and towards the position corresponding to the maximum value are substantially equal to each other. Clearly, it is also possible to specify axial travels of different extents, based on correspondingly different angular travels of the ring, in order to meet specific requirements.

Figure 6 shows the ring mounted on the sleeve and fixed with the latter in the aforesaid predetermined relative position. The angular travel in the clockwise direction as shown in the drawing, identified by the arrow A, is preferably set at approximately 160°, thus providing a corresponding axial travel of the sleeve 10 towards the diaphragm to the point where the maximum value of the resilient load that can be exerted on the diaphragm is reached (at the end stop). In the end stop position, the surface 23a of the projection 23 interferes with the surface 24a of the projection 24 by butting against it. Conversely, starting from the position in Figure 6, a rotation in the anti-clockwise direction as shown in the drawing, indicated by the arrow B, and also preferably set at approximately 160°, enables the sleeve formation to travel axially away from the diaphragm up to the point at which the end stop is reached and at which the minimum resilient load is applied to the diaphragm. In the end stop position, the surface 23b of the projection 23 interferes with the surface 24b of the projection 24 by butting against it.

Because of the travel limiting action of the ring, the pressure values that can be regulated during the installation of the device lie between the predetermined minimum and maximum values reached at the end stop positions, and these values can be predetermined in the course of calibration.

In particular, the installer is prevented, in the installation phase, from setting resilient loads correlated with pressure values which are inadmissible either because they are greater than the maximum load (maximum pressure) or because they are less than the minimum load (minimum pressure) acceptable and suitable for efficient combustion.

During installation, therefore, the load can be regulated only within a range delimited by the aforesaid minimum and maximum values which relate to a predetermined nominal value, resulting in significant benefits. In the first place, this prevents incorrect calibration which would have a critical effect on combustion efficiency if the settings were beyond these thresholds, especially if the combustion condition (CO or CO₂ emissions) could not be monitored with sensors or other detectors.

In a variant of the device (not shown), it is possible for the spring 9 not to bear directly on the sleeve formation through the surface 10a, but for it to bear on a second sleeve formation which is fitted on the sleeve 10 and fixed thereto by a male and female thread coupling. In this case, the auxiliary sleeve which bears directly on the spring is not made to rotate in the operating phases, and therefore does not cause any torsion of the spring. Because of the aforesaid male and female thread coupling, a rotation of the main sleeve 10 causes a translation of the auxiliary sleeve together with the spring.

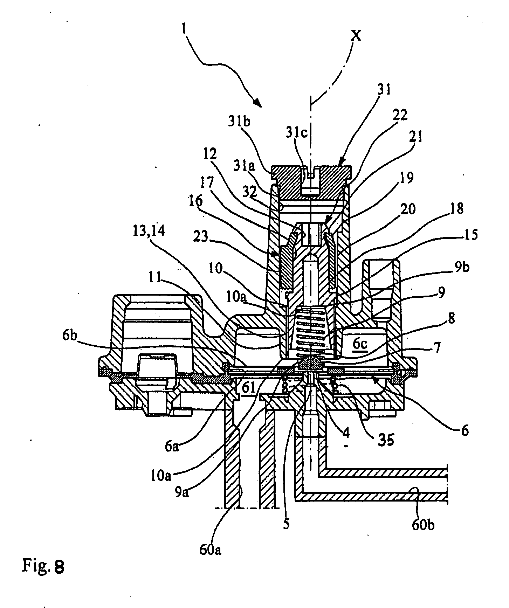

Figure 8 shows a further example of the invention, in which details similar to those of the preceding examples are indicated by the same reference numerals. This example differs from the preceding ones mainly in that it includes a further spring, indicated by 35, acting between the diaphragm 6 and a stationary part of the device, on the side opposite that on which the spring 9 acts, as is clearly shown in Figure 8. Preferably, the spring 35, which is shown only schematically, is mounted coaxially with the spring 9 and has the function of acting in opposition to the spring 9, in order to enable negative pressures to be obtained during regulation, as is typically provided for in air and gas regulators.

Thus the invention achieves the proposed objects while providing the benefits claimed above as compared with the known solutions.

## Claims

1. A device for regulating the delivery pressure of a combustible gas, comprising:
- at least one valve seat (5) and a respective closure element (4) which is controlled by a diaphragm (6), this element being associated with said seat and being displaceable along a predetermined axis (X) during the movement of opening and/or closing the seat,
- resilient actuator means including a first spring (9) which can be regulated and which acts on the diaphragm (6) in order to subject it to a predetermined resilient load,
- means of regulating the resilient load exerted by said first spring (9) on the diaphragm (6), comprising a first stop means (10) of said spring, which is axially displaceable in an adjustable way along said axis (X), a male and female thread coupling (13, 14) being provided between the first stop means and a stationary structure of the device,
in such a way that the resilient load of said spring (9) can be regulated by the relative displacement of said first stop means (10) with respect to the stationary structure, wherein rotary movements of said first stop means (10) about said axis (X) are converted to respective translational movements along said axis by the corresponding male and female thread coupling (13, 14), said regulating means comprising a second stop means (16) which can be fixed to said first stop means (10) with respect to rotation about said axis (X), means and counter-means being provided to limit the angular rotation of said second stop means (16) with respect to the stationary structure of the device, in such a way that the translational travel of the first stop means (10) is thus limited between two opposing predetermined end stop positions determining, respectively, the minimum resilient load and the maximum resilient load that can be exerted on the diaphragm (6) of the device, **characterized in that** the first stop means comprises a sleeve formation (10) and said second stop means comprises a ring formation (16) which is fitted coaxially on the sleeve formation and is fixed rotationally to said sleeve formation in a predetermined relative angular position.

2. A device according to Claim 1, in which said means and counter-means for limiting the angular rotation comprise at least one pair of surfaces (24a,b; 23a,b) abutting against each other, and formed, respectively, on the second stop means (16) and on the stationary structure of the device, these surfaces interfering with each other when the second stop means rotates about said axis, in such a way that said angular travel is limited in one direction of rotation and in the opposite direction by the abutting of said surfaces against each other.

3. A device according to Claim 2, in which said means and counter-means comprise at least a first projection (23) protruding from said second stop means (16), capable of interfering with the corresponding surfaces (24a, 24b) of a second projection (24) formed in the stationary structure of the device.

4. A device according to any one of the preceding claims, in which said ring formation (16) is also fixed axially to said sleeve formation (10).

5. A device according to Claim 4, in which a first spline coupling (17, 18) is provided between said sleeve formation (10) and said ring formation (16) to lock them with respect to relative rotation in a predetermined relative angular position.

6. A device according to Claim 4 or 5, in which a snap-fit coupling is provided between said sleeve (10) and ring (16) formations to lock them axially relative to each other.

7. A device according to Claim 3, in which said first and second projections (23, 24) are developed along a prevailing direction parallel to said axis (X) and each projection has a pair of opposing faces (23a,b; 24a,b), these pairs being capable of abutting against each other in the positions corresponding to the minimum and maximum values of the resilient load.

8. A device according to any one of the preceding claims, in which the ring formation (16) is fitted on the sleeve formation (10) with relative positioning such that the first projection (23) is placed on the side diametrically opposite the second projection (24), in such a way that equal angular rotations are defined in each direction of rotation about the axis (X), the corresponding axial regulation travel towards the minimum value being equal to the opposite axial travel towards the maximum value, starting from a predetermined position of the sleeve formation (10) with respect to the stationary structure, said position corresponding to a predetermined nominal value of the resilient load exerted on the diaphragm (6).

9. A device according to any one of the preceding Claims, in which said resilient actuator means comprise at least one helical spring (9) positioned coaxially with respect to the diaphragm and having axial ends bearing, respectively, on a projection (8) connected centrally to the diaphragm (6) and on a surface (10a) provided on the sleeve formation (10).

10. A device according to Claim 9, in which said spring (9) is at least partially housed in a blind cavity formed in the sleeve formation (10), said stop surface (10a) of the spring (9) being defined in the base portion of said cavity.

11. A device according to Claim 9 or 10, wherein a second spring (35) is provided, this spring being placed coaxially with respect to the diaphragm (6) and acting on the side of the latter opposite the side on which the first spring (9) bears, said second spring (35) acting, between said diaphragm and a stationary part of the device, in opposition to the resilient action of the first spring (9).

## Patentansprüche

1. Vorrichtung zur Förderdruckregelung eines Brenngases, umfassend:
- mindestens einen Ventilsitz (5) und ein zugehöriges Verschlusselement (4), das von einer Membran (6) betätigt wird, wobei dieses Element dem Sitz zugeordnet ist und während der Bewegung beim Öffnen und/oder Schließen des Sitzes entlang einer vorgegebenen Achse (X) verschiebbar ist,
- federnde Stellmittel mit einer ersten Feder (9), die reguliert werden kann und die auf die Membran (6) wirkt, um eine vorgegebene Rückstellkraft darauf auszuüben,
- Mittel zum Regulieren der von der ersten Feder (9) auf die Membran (6) ausgeübten Rückstellkraft, umfassend ein erstes Anschlagmittel (10) der Feder, das einstellbar entlang der Achse (X) axial verschiebbar ist, wobei eine Gewindekupplung mit männlichem und weiblichem Element (13, 14) zwischen dem ersten Anschlagmittel und einer stationären Struktur der Vorrichtung vorgesehen ist,
derart, dass die Rückstellkraft der Feder (9) durch die relative Verschiebung des ersten Anschlagmittels (10) in Bezug auf die stationäre Struktur reguliert werden kann, wobei Drehbewegungen des ersten Anschlagmittels (10) um die Achse (X) durch die korrespondierende Gewindekupplung mit männlichem und weiblichem Element (13, 14) in zugehörige Translationsbewegungen entlang der Achse umgewandelt werden, wobei die Regulationsmittel ein zweites Anschlagmittel (16) umfassen, das an dem ersten Anschlagmittel (10) in Bezug auf eine Drehung um die Achse (X) festgelegt werden kann, wobei Mittel und Gegenmittel vorgesehen sind, um die Winkelauslenkung des zweiten Anschlagmittels (16) in Bezug auf die stationäre Struktur der Vorrichtung derart zu begrenzen, dass der Translationsweg des ersten Anschlagmittels (10) dadurch zwischen zwei gegenüberliegenden vorgegebenen Endanschlagpositionen begrenzt ist, die jeweils die minimale Rückstellkraft bzw. die maximale Rückstellkraft bestimmen, die auf die Membran (6) der Vorrichtung ausgeübt werden kann, **dadurch gekennzeichnet, dass** das erste Anschlagmittel eine Buchsenformation (10) umfasst und das zweite Anschlagmittel eine Ringformation (16) umfasst, die koaxial an der Buchsenformation angebracht ist und drehbar an der Buchsenformation in einer vorgegebenen relativen Winkelposition festgelegt ist.

2. Vorrichtung nach Anspruch 1, bei der Mittel und Gegenmittel zum Begrenzen der Winkelauslenkung mindestens ein Paar Flächen (24a,b; 23a,b) umfassen, die gegeneinander anliegen und jeweils auf dem zweiten Anschlagmittel (16) bzw. auf der stationären Struktur der Vorrichtung ausgebildet sind, wobei diese Flächen, wenn sich das zweite Anschlagmittel um die Achse dreht, derart miteinander in Wechselwirkung treten, dass der Winkelausschlag in eine Drehrichtung und in die Gegenrichtung durch ein Anlegen der Flächen gegeneinander begrenzt ist.

3. Vorrichtung nach Anspruch 2, wobei die Mittel und Gegenmittel mindestens einen ersten Vorsprung (23) umfassen, der vom zweiten Anschlagmittel (16) abragt und dazu ausgebildet ist, mit den korrespondierenden Flächen (24a, 24b) eines zweiten Vorsprungs (24) in Wechselwirkung zu treten, der auf der stationären Struktur der Vorrichtung ausgebildet ist.

4. Vorrichtung nach einem der vorhergehenden Ansprüche, bei der die Ringformation (16) auch an der Buchsenformation (10) axial festgelegt ist.

5. Vorrichtung nach Anspruch 4, bei der eine erste Keilwellenkupplung (17, 18) zwischen der Buchsenformation (10) und der Ringformation (16) vorgesehen ist, um sie gegen eine relative Drehung in einer vorgegebenen relativen Winkelposition zu arretieren.

6. Vorrichtung nach Anspruch 4 oder 5, bei der eine Rastkupplung zwischen der Buchsenformation (10) und der Ringformation (16) vorgesehen ist, um sie axial gegeneinander zu arretieren.

7. Vorrichtung nach Anspruch 3, bei der der erste und der zweite Vorsprung (23, 24) entlang einer Vorzugsrichtung parallel zu der Achse (X) entwickelt sind und jeder Vorsprung ein Paar gegenüberliegender Seiten (23a,b; 24a,b) aufweist, wobei diese Paare dazu ausgebildet sind, dass sie in den Positionen, die mit dem Minimalwert und dem Maximalwert der Rückstellkraft korrespondieren, gegeneinander anliegen.

8. Vorrichtung nach einem der vorhergehenden Ansprüche, bei der die Ringformation (16) an der Buchsenformation (10) angebracht ist, wobei die Position derart gewählt ist, dass der erste Vorsprung (23) auf der Seite dem zweiten Vorsprung (24) diametral gegenüberliegend platziert ist, so dass dadurch gleiche Winkelauslenkungen in jede Drehrichtung um die Achse (X) definiert sind, wobei der korrespondierende axiale Regulationsausschlag zum Minimalwert gleich dem entgegengesetzten axialen Ausschlag zum Maximalwert ist, ausgehend von einer vorgegebenen Position der Buchsenformation (10) in Bezug auf die stationäre Struktur, wobei die Position mit einem vorgegebenen Nominalwert der Rückstellkraft korrespondiert, die auf die Membran (6) ausgeübt wird.

9. Vorrichtung nach einem der vorhergehenden Ansprüche, bei der die federnden Stellmittel mindestens eine Schraubenfeder (9) umfassen, die koaxial zur Membran positioniert ist und axiale Enden aufweist, die jeweils auf einem Vorsprung (8), der mittig mit der Membran (6) verbunden ist, bzw. an einer Fläche (10a), die auf der Buchsenformation (10) vorgesehen ist, aufliegen.

10. Vorrichtung nach Anspruch 9, bei der die Feder (9) mindestens teilweise in einem Blindloch aufgenommen ist, das in der Buchsenformation (10) ausgebildet ist, wobei die Anschlagfläche (10a) der Feder (9) im Basisabschnitt des Blindlochs definiert ist.

11. Vorrichtung nach Anspruch 9 oder 10, bei der eine zweite Feder (35) vorgesehen ist, wobei diese Feder koaxial zur Membran (6) platziert ist und auf die Seite der Membran wirkt, die der Seite gegenüberliegt, an der die erste Feder (9) aufliegt, wobei die zweite Feder (35) zwischen der Membran und einem stationären Teil der Vorrichtung entgegen der Rückstellwirkung der ersten Feder (9) wirkt.

## Revendications

1. Dispositif pour réguler la pression de distribution d'un gaz combustible, comprenant :
- au moins un siège de soupape (5) et un élément de fermeture (4) respectif qui est commandé par un diaphragme (6), cet élément étant associé avec ledit siège et pouvant être déplacé le long d'un axe (X) prédéterminé pendant le mouvement d'ouverture et/ou de fermeture du siège,
- des moyens formant actionneur élastique comprenant un premier ressort (9) qui peut être régulé et qui agit sur le diaphragme (6) afin de le soumettre à une charge élastique prédéterminée,
- des moyens permettant de réguler la charge élastique exercée par ledit premier ressort (9) sur le diaphragme (6), comprenant des premiers moyens de butée (10) dudit ressort, qui sont axialement déplaçables d'une manière réglable le long dudit axe (X), un couplage de filetage mâle et femelle (13, 14) étant prévu entre les premiers moyens de butée et une structure fixe du dispositif,
de sorte que la charge élastique dudit ressort (9) peut être régulée par le déplacement relatif desdits premiers moyens de butée (10) par rapport à la structure fixe, dans lequel les mouvements de rotation desdits premiers moyens de butée (10) autour dudit axe (X) sont transformés en mouvements de translation respectifs le long dudit axe par le couplage de filetage mâle et femelle (13, 14) correspondant, lesdits moyens de régulation comprenant des seconds moyens de butée (16) qui peuvent être fixés sur lesdits premiers moyens de butée (10) par rapport à la rotation autour dudit axe (X), des moyens et des contre-moyens étant prévus pour limiter la rotation angulaire desdits seconds moyens de butée (16) par rapport à la structure fixe du dispositif, de sorte que le déplacement de translation desdits premiers moyens de butée (10) est donc limité entre deux positions de butée d'extrémité prédéterminées opposées déterminant, respectivement, la charge élastique minimum et la charge élastique maximum qui peuvent être exercées sur le diaphragme (6) du dispositif, **caractérisé en ce que** les premiers moyens de butée comprennent une formation de manchon (10) et lesdits seconds moyens de butée comprennent une formation de bague (16) qui est montée de manière coaxiale sur la formation de manchon et est fixée en rotation sur ladite formation de manchon dans une position angulaire relative prédéterminée.

2. Dispositif selon la revendication 1, dans lequel lesdits moyens et lesdits contre-moyens pour limiter la rotation angulaire comprennent au moins une paire de surfaces (24a, b ; 23a, b) venant en butée l'une contre l'autre, et formées respectivement, sur les seconds moyens de butée (16) et sur la structure fixe du dispositif, ces surfaces interférant entre elles lorsque les seconds moyens de butée tournent autour dudit axe, de sorte que ledit déplacement angulaire est limité dans une direction de rotation et dans la direction opposée par la butée desdites surfaces l'une contre l'autre.

3. Dispositif selon la revendication 2, dans lequel lesdits moyens et lesdits contre-moyens comprennent au moins une première saillie (23) faisant saillie desdits seconds moyens de butée (16), capable d'interférer avec les surfaces (24a, 24b) correspondantes d'une seconde saillie (24) formée dans la structure fixe du dispositif.

4. Dispositif selon l'une quelconque des revendications précédentes, dans lequel ladite formation de bague (16) est également fixée de manière axiale sur ladite formation de manchon (10).

5. Dispositif selon la revendication 4, dans lequel un premier couplage par cannelure (17, 18) est prévu entre ladite formation de manchon (10) et ladite formation de bague (16) pour débloquer par rapport à la rotation relative dans une position angulaire relative prédéterminée.

6. Dispositif selon la revendication 4 ou 5, dans lequel un couplage par encliquetage est prévu entre lesdites formations de manchon (10) et de bague (16) pour les bloquer de manière axiale l'une par rapport à l'autre.

7. Dispositif selon la revendication 3, dans lequel lesdites première et seconde saillies (23, 24) sont développées le long d'une direction prédominante parallèle audit axe (X), et chaque saillie a une paire de faces opposées (23a, b ; 24a, b), ces paires étant capables de venir en butée l'une contre l'autre dans des positions correspondant aux valeurs minimum et maximum de la charge élastique.

8. Dispositif selon l'une quelconque des revendications précédentes, dans lequel la formation de bague (16) est montée sur la formation de manchon (10) avec le positionnement relatif de sorte que la première saillie (23) est placée du côté diamétralement opposé à la seconde saillie (24), de sorte que des rotations angulaires identiques sont définies dans chaque direction de rotation autour de l'axe (X), le déplacement de régulation axial correspondant vers la valeur minimum étant identique au déplacement axial opposé vers la valeur maximum, en commençant par une position prédéterminée de la formation de manchon (10) par rapport à la structure fixe, ladite position correspondant à une valeur nominale prédéterminée de la charge élastique exercée sur le diaphragme (6).

9. Dispositif selon l'une quelconque des revendications précédentes, dans lequel lesdits moyens formant actionneurs élastiques comprennent au moins un ressort hélicoïdal (9) positionné de manière coaxiale par rapport au diaphragme et ayant des extrémités axiales s'appuyant, respectivement sur une saillie (8) raccordée de manière centrale au diaphragme (6) et sur une surface (10a) prévue sur la formation de manchon (10).

10. Dispositif selon la revendication 9, dans lequel ledit ressort (9) est au moins partiellement logé dans une cavité borgne formée dans la formation de manchon (10), ladite surface de butée (10a) du ressort (9) étant définie dans la partie de base de ladite cavité.

11. Dispositif selon la revendication 9 ou 10, dans lequel un second ressort (35) est prévu, ce ressort étant placé de manière coaxiale par rapport au diaphragme (6) et agissant sur le côté de ce dernier, opposé au côté sur lequel le premier ressort (9) s'appuie, ledit second ressort (35) agissant, entre ledit diaphragme et une partie fixe du dispositif, en opposition à l'action élastique du premier ressort (9).
